## Europäisches Patentamt
## European Patent Office
## Office européen des brevets

(19)

(11) Veröffentlichungsnummer: **0 004 295**
**B1**

(12) **EUROPÄISCHE PATENTSCHRIFT**

(45) Veröffentlichungstag der Patentschrift: **09.06.82**

(51) Int. Cl.³: **H 01 B 13/04**

(21) Anmeldenummer: **79100580.4**

(22) Anmeldetag: **26.02.79**

(54) **Vorrichtung zum SZ-Verseilen von Verseilelementen elektrischer Kabel und Leitungen sowie Verfahren zum Betrieb dieser Vorrichtung.**

(30) Priorität: 23.03.78 DE 2813491
28.07.78 DE 2833698
28.07.78 DE 2833701
08.01.79 DE 2900729

(43) Veröffentlichungstag der Anmeldung:
03.10.79 Patentblatt 79/20

(45) Bekanntmachung des Hinweises auf die Patenterteilung:
09.06.82 Patentblatt 82/23

(84) Benannte Vertragsstaaten:
CH FR GB

(73) Patentinhaber: SIEMENS AKTIENGESELLSCHAFT
Berlin und München.
Postfach 22 02 61
D-8000 München 22 (DE)

(72) Erfinder: Vogelsberg, Dieter
Fichtestrasse 7
D-8630 Coburg (DE)
Erfinder: Koch, Klaus
Belfaster Strasse 54
D-1000 Berlin 65 (DE)

(56) Entgegenhaltungen:
CH - A - 450 232
DE - A - 1 685 842
DE - A - 1 801 055
DE - A - 1 953 479
DE - A - 2 045 513
DE - A - 2 230 972
DE - B - 1 515 730
FR - A - 1 387 985
FR - A - 2 206 564
FR - A - 2 291 623

Courier Press, Leamington Spa, England.

## Vorrichtung zum SZ-Verseilen von Verseilelementen elektrischer Kabel und Leitungen sowie Verfahren zum Betrieb dieser Vorrichtung

Die Erfindung liegt auf dem Gebiet der SZ-Verseilung von Verseilelementen elektrischer Kabel und Leitungen und zielt darauf ab, den Einfluß der Umkehrstellen der Drallrichtung der Verseilelemente auf die mechanischen und/oder elektrischen Eigenschaften des Verseilgutes zu vermindern.

Die Anfang der 60er Jahre einsetzende Entwicklung auf dem Gebiet der SZ-Verseiltechnik für elektrische Kabel und Leitungen hat zu SZ-Verseilverfahren und SZ-Verseilmaschinen geführt, mit denen sich zwei bis fünf Verseilelemente problemlos miteinander verseilen lassen. Die SZ-Verseilung wird heute angewendet bei der kombinierten Paar-, Dreier- oder Sternvierer-Grundbündelverseilung von Nachrichtenkabeln sowie bei der Verseilung mit anschließender Ummantelung von mehradrigen, fest zu verlegenden Starkstromleitungen mit Leiterquerschnitten bis 2,5 mm².

Der Einsatz der SZ-Verseilung kommt überall dort in Betracht, wo sich ein Verseilvorgang und ein weiterer Arbeitsgang miteinander kombinieren lassen. Neben den soeben erwähnten Fertigungsabläufen gilt dies auch für die Verseiling flexibler Elemente in Kombination mit einem weiteren Arbeitsgang, beispielsweise für die Verseilung und anschließende Ummantelung der Adern von flexiblen Leitungen, deren Leiter aus Drahtlitzen bestehen, oder auch für die Verseilung von Litzenleitern und das anschließende Aufbringen (Extrudieren) der Isolierung. Solche flexiblen Leitungen sind beispielsweise Aderleitungen, Anschlußleitungen von Haushaltsgeräten und Anschlußschnüre für Fernsprechgeräte.

Die in der Praxis übliche SZ-Verseilung der Verseilelemente erfolgt in aller Regel mit Hilfe von Speichereinrichtungen, in denen das zu einem Strang zusammengefaßte Verseilgut gestreckt geführt wird und die aus einem ersten, am Eingang der Speichereinrichtung angeordneten Verseilpunkt beispielsweise einem Verseilnippel, und aus einem zweiten, am Ausgang der Speichereinrichtung angeordneten Verseilpunkt (beispielsweise einem Verseilnippel oder Einer Umlenkrolle) und aus je einem unmittelbar hinter dem ersten Verseilpunkt und unmittelbar vor dem zweiten Verseilpunkt angeordneten, rotierbaren Verseilkopf bestehen. Die Rotationsachsen der Verseilköpfe liegen dabei in der Verseilachse, in der auch die zu einem Strang zusammengefaßten Verseilelemente geführt sind. Zum Zwecke der SZ-Verseilung wird dabei entweder die Drehrichtung der beiden Verseilköpfe oder bei gleichbleibender Drehrichtung lediglich die Drehzahl eines oder beider Verseilköpfe in Abständen geändert, die der Durchlaufzeit eines Querschnittselementes des Verseilgutes vom ersten Verseilpunkt zum zweiten Verseilpunkt entsprechen (DE—AS 15 15 730, DE—PS 22 30 972).

Die Änderung der Drehbewegung der Verseilköpfe erfolgt dabei in aller Regel periodisch in zwei Schritten, d. h. die Drehbewegung wechselt zwischen Linkslauf und Rechtslauf oder zwischen einer niedrigen und einer hohen Drehzahl. Es ist aber auch bekannt, die Drehbewegung einer als Rollenspeicher aufgebauten Speichereinrichtung innerhalb einer Verseilperiode in mehreren Schritten zu verändern. Hierdurch kann man erreichen, daß der Abstand der Umkehrstellen der Drallrichtung im fertigen Verseilgut größer ist als die Speicherlänge der Speichereinrichtung (DE—OS 18 01 055).

Bei den in neuerer Zeit entwickelten und im Einsatz befindlichen SZ-Verseilmaschinen, bei denen das Verseilgut im gestreckten Zustand durch die Speichereinrichtung geführt wird, beträgt der Abstand zwischen dem Eingang und dem Ausgang der Speichereinrichtung und damit zwischen den beiden am Ausgang und am Eingang angeordneten Verseilöpfen etwa 2—10 m. Da die Drehbewegung der Verseilköpfe in Abständen geändert wird, die der Durchlaufzeit eines Querschnittselementes des Verseilgutes durch die Speichereinrichtung entsprechen, beträgt auch der Abstand der Umkehrstellen der Drallrichtung im fertigen Verseilgut etwa 2—10 m. Diese Umkehrstellen der Drallrichtung stellen sowohl mechanische als auch elektrische Schwachstellen dar, weil sich einerseits die Verseilelemente im Bereich der Umkehrstellen aufseilen können oder weil die Flexibilität der Verseilelemente im Bereich der Umkehrstellen gemindert ist und weil die Verseilelemente im Bereich der Umkehrstellen relativ unverseilt zueinander angeordnet sind, so daß sich hier bei Nachrichtenkabeln besonders hohe elektrische Kopplungen ergeben. Es sind eine Reihe von Maßnahmen bekannt, die darauf abzielen, bei Beibehaltung des vorerwähnten Abstandes der Umkehrstellen der Drallrichtung die negativen Auswirkungen dieser Umkehrstellen zu vermindern, beispielsweise die Verseilelemente im Bereich der Umkehrstellen mit relativ kurzer Schlaglänge zu verseilen oder den Abstand der Umkehrstellen periodisch um einen Mittelwert schwanken zu lassen. Es ist aber auch bekannt, den Abstand der Umkehrstellen der Drallrichtung dadurch erheblich zu vergrößern, daß man eine Speichereinrichtung mit sehr großer Speicherlänge wählt. Die hierzu vorgeschlagene konstruktive Ausgestaltung sieht vor, daß koaxial zur Verseilachse und um diese oszillierend ein Wickelkörper angeordnet ist, auf dem das Verseilgut in einer Vielzahl von um die Verseilachse laufenden Windungen angeordnet ist und dem beidseitig Führungsglieder zugeordnet sind, von denen das eine das Verseilgut auf den Wickelkörper aufwickelt und das andere das Verseilgut vom Wickelkörper abwickelt. Der Wickelkörper selbst ist so ausgestaltet, daß die an dem einen Ende aufgebrachte Windung des Verseilgutes längs des Wickelkörpers an dessen anderes Ende transportiert werden kann (DE—OS 16 85 842). Ein mit einer solchen Speichereinrichtung hergestelltes Verseilgut, bei dem also die Umkehrstellen der Drallrichtung einen großen Abstand zueinander haben, kann in kurze Verbrauchslängen zerschnitten werden, die keine Umkehrstellen der Dralltichtung aufweisen. Die hierzu vorgesehene Speichereinrichtung ist jedoch konstruktiv sehr aufwedig, ihre Ausgestaltung im Hinblick auf die Fixierung derjenigen Stellen des Verseilgutes, an denen die Wickelrichtung des Speicherelementes gewechselt wird, erscheint schwierig und die Fertigungsgeschwindigkeit dürfte relativ niedrig sein.

An sich ist es weiterhin bekannt, zur Unterstützung der Verseileinrichtung einer drehbaren Verseilscheibe der Verseilscheibe mehrere, das gereckt geführte Verseilgut umfassende geradlinige Führungen sowie einen Verseilkopf vorzuschalten, die um die Verseilachse rotieren und synchron mit der Verseilscheibe ihre Drehrichtung in Abständen wechseln (FR—A 22 91 623).

Der Erfindung liegt die Aufgabe zugrunde, eine SZ-Verseilmaschine für elektrische Kabel und Leitungen so auszugestalten, daß sich bei hoher Fertigungsgeschwindigkeit und vergleichsweise kurzer Baulänge der Maschine relativ große Abstände von bis zu 500 oder 1000 m der Umkehrstellen der Drallrichtung im fertigen Verseilgut ergeben.

Bei der Lösung dieser Aufgabe geht die Erfindung von einer Vorrichtung nach DE—A—2230 972 aus, die zum SZ-Verseilen von Verseilelementen elektrischer Kabel und Leitungen einer Speichereinrichtung enthält, die zwischen einer ortsfest angeordneten Ablaufeinrichtung für die Verseilelemente und einer Abzug- und Aufwickeleinrichtung für das Verseilgut angeordnet ist und die aus einem ersten, am Eingang der Speichereinrichtung angeordneten Verseilpunkt (Verseilnippel) und aus einem zweiten, am Ausgang der Speichereinrichtung angeordneten Verseilpunkt (Verseilnippel, Umlenkrolle) und aus je einem unmittelbar hinter dem ersten Verseilpunkt und unmittelbar vor dem zweiten Verseilpunkt angeordneten, mit wechselnder Drehzahl rotierbaren Verseilkopf besteht, wobei die Rotationsachsen der Verseilköpfe in der Verseilachse liegen, in der auch die zu einem Strang zusammengefaßten Verseilelemente geführt sind. Gemäß der Erfindung ist vorgesehen, daß

a) zwischen den beiden Verseilköpfen mehrere ortsfeste Fürungen zur geradlinigen Führung und mindestens eine ortsfeste Führung zur Umlenkung des aus den Verseilelementen gebildeten Stranges um einen Umlenkwinkel von 180° oder annähernd 180° angeordnet sind,

b) die Verseilköpfe und die geradlinigen Führungen in zueinander parallelen Ebenen und in diesen Ebenen Gleichachsig angeordnet sind, wobei jeweils eine Führung zur Umlenkung des Stranges zwischen der letzten geradlinigen Führung einer Ebene und der ersten geradlinigen Fürrung der nächstfolgenden Ebene angeordnet ist und

c) wenigstens die geradlinigen Führungen oder einige davon gleichsinnig mit den Verseilköpfen um die Verseilachse rotierbar sind und/oder die Führungsflächen wenigstens der geradlinigen Führungen oder der übrigen davon in Umfangsrichtung der einen Strang bildenden Verseilelemente an diesem kraftfrei oder nahezu kraftfrei anliegen.

Bei einer derartigen Ausgestaltung der Speichereinrichtung einer SZ-Verseilmaschine wird die ursprünglich geradlinige Speicherstrecke in mehrere Teilstrecken aufgeteilt, die untereinander durch Führungen zur Umlenkung des Stranges aufeinanderfolgend derart miteinander verbunden sind, daß sich insgesamt eine etwa ziehharmonikaförmige Anordnung der Speicherteilstrecken ergibt. Dadurch ist die für große Speicherstrecken an sich erforderliche Baulänge auf einen Bruchteil verkürzt. Die Baulänge der Speichereinrichtung übersteigt damit die Baulänge von anderen, bei der Herstellung elektrischer Kable und Leitungen benötigten Maschineneinrichtungen nicht oder nur unwesentlich. Beispielsweise kann eine erforderliche Speicherstrecke von 100 m in zehn Teilstrecken von je 10 m Länge zerlegt werden, so daß die Baulänge der Speichereinrichtung insgesamt nur 10 m beträgt, oder eine Speicherlänge von 240 m kann in sechs Teilstrecken von 40 m zerlegt werden. Hierbei ist zu berücksichtigen, daß sich an die SZ-Verseilung von Verseilelementen häufig ein Fertigungsgang anschließt, bei dem auf die Verseilelemente eine Umhüllung durch Extrusion eines Kunststoffes aufgebracht wird und bei dem diese Kunststoffumhüllung anschließend in einer Kühleinrichtung gekühlt wird. Die hierfür handelsüblichen Kühlbecken haben Baulängen von beispielsweise 20 bis 50 m. Sofern die neue Speichereinrichtung im Zuge einer Verseilung und anschließenden Ummantelung von Verseilelementen eingesetzt wird, könnte die Speichereinrichtung also parallel neben der Kühleinrichtung angeordnet werden, ohne dadurch die Baulänge der gesamten Fertigungseinrichtung zu vergrößern. Dies gilt vor allem dann, wenn die neue Verseileinrichtung zur Verseilung von Adern für Schlauchleitungen vorgesehen ist, die zwar in großen Fertigungslängen hergestellt werden, deren Gebrauchslängen aber relativ kurz sind, so daß die Umkehrstellen der Drallrichtung in der fertigen Leitung ohne großen Materialverlust oder ohne daß große Restlängen entstehen, herausgeschnitten werden können.

Die effektive Speicherlänge der neuen SZ-Verseilvorrichtung kann dadurch vergrößert werden, daß die Drehbewegungen der Verseilköpfe, die mit stets gleichbleibender Drehrichtung umlaufen, nicht wie bisher üblich in lediglich zwei Schritten, sondern in wenigstens zwei zunehmenden und in gleich vielen abnehmenden Schritten verändert werden. Je nach Anzahl der vorgesehenen Schritte kann hierdurch der im fertigen Verseilgut vorliegende Abstand der Umkehrstellen der Drallrichtung auf ein Mehrfaches der tatsächlichen Speicherlänge der Speichereinrichtung vergrößert werden. Hierbei wird eine gleichmäßige Verseilung des Verseilgutes dann erreicht, wenn die Drehzahldifferenz zwischen zwei aufeinanderfolgenden Schritten stets gleich ist, Beispielsweise wird durch drei zunehmende und drei abnehmende Schritte bei der Drehzahländerung der Verseilköpfe, d. h. bei sechs Schritten innerhalb einer Verseilperiode, der Abstand der Umkehrstellen auf das Dreifache der Speicherlänge der Speichereinrichtung vergrößert.

Bei einer gemäß der Erfindung ausgebildeten Speichereinrichtung sind die am Eingang und am Ausgang der Speichereinrichtung angeordneten Verseilköpfe und die geradlinigen Führungen für das Verseilgut in verschiedenen Ebenen angeordnet. Im Interesse einer möglichst großen Speicherlänge der Speichereinrichtung empfiehlt es sich hierbei, die geradlinigen Führungen in mehr als zwei parallelen Ebenen anzuordnen, wobei dann der am Eingang angeordnete Verseilkopf in der ersten Ebene und der am Ausgang angeordnete Verseilkopf in der letzten Ebene liegt.

Für Speichereinrichtungen von SZ-Verseilmaschinen, bei denen das Verseilgut innerhalb der Speichereinrichtung gestreckt, d. h. in der Verseilachse geführt wird, ist charakteristisch, daß das gestreckt geführte Verseilgut eine rotierende Bewegung um seine eigene Achse ausführt. Die bei der neuen Speichereinrichtung vorgesehenen geradlinigen Führungen und die Führungen zur Umlenkung des Stranges müssen eine solche Rotation des gestreckt geführten Verseilgutes ermöglichen oder bewirken. Hinsichtlich der geradlinigen Führungen kann dies dadurch erreicht werden, daß der Innendurchmesser der das Verseilgut umfassenden Führungen größer als das Verseilgut ist, so daß auf das Verseilgut in Umfangsrichtung praktisch keine Kräfte einwirken, oder daß die geradlinigen Führungen mit dem Verseilgut um die Verseilachse rotieren. Die geradlinigen Führungen können hierzu selbst als rotierbare Verseilköpfe ausgebildet sein oder aus rotierbaren Rohrstücken bestehen. Um die Übertragung der Drehbewegung des Verseilgutes im Bereich der Führungen zur Umlenkung des Stranges von einer Ebene in die nächstfolgende Ebene sicherzustellen, kann in Weiterbildung der Erfindung unmittelbar vor und hinter jeder Führung ein weiterer Verseilkopf angeordnet sein, wobei diese weiteren Verseilköpfe mit den am Eingang und am Ausgang der Speichereinrichtung angeordneten Verseilköpfen gleichsinnig rotierbar sind. Die Verseilköpfe können dabei als geradlinige Führungen oder als Teil der Führungen zur Umlenkung des Stranges angesehen werden. Die eigentliche Umlenkung des Stranges von einer Ebene in die nächste Ebene, insbesondere in die nächstparallele Ebene, kann in diesem Fall mit Hilfe einer einzigen Umlenkscheibe bzw. Umlenkrolle erfolgen, die auch als Abzugeinrichtung ausgebildet sein kann. In diesem Fall wird das Verseilgut beim Auflaufen auf die Umlenkscheibe weitestgehend aufgeseilt und beim Ablaufen von der Umlenkscheibe wieder zugeseilt, so daß das Verseilgut trotz kurzzeitiger Unterbrechung seiner Drehbewegung vor und hinter der Umlenkscheibe den gleichen Verdrillungszustand aufweist und nach Verlassen der Umlenkscheibe seine Drehbewegung fortsetzen kann.

Die Übertragung der Drehbewegung des Verseilgutes und damit seines Verdrillungszustandes im Bereich der Führungen zur Umlenkung des Stranges kann auch dadurch erfolgen, daß außer den Führungsflächen der geradlinigen Führungen auch die Führungsflächen der Führungen zur Umlenkung des Stranges in Umfangsrichtung des ständig um seine Achse rotierenden Stranges an diesem kraftfrei oder nahezu kraftfrei anliegen. Eine solche Umlenkung des Stranges kann beispielsweise mittels einer flexiblen, um ihre eigene Achse rotierbaren hohlwelle oder mittels flexibler Schläuche erfolgen. Vorteilhaft ist auch eine Führung, die aus drei oder mehr auf einem Kreisbogen angeordneten Führungsrollen besteht, wobei gewährleistet ist, daß der Umschlingungswinkel der einzelnen Führungsrollen nicht größer als 60° ist. Bei Verwendung einer größeren Anzahl von Umlenkrollen kann zwischen den Umlenkrollen auch ein angetriebener Verseilkopf zur Aufrechterhaltung der Drehbewegung des Verseilgutes angeordnet sein. Sofern Materialien mit sehr geringem Reibungskoeffizienten zur Verfügung stehen, kann die Führung zur Umlenkung des Stranges auch aus einer Gleitkufe bestehen.

Eine besonders vorteilhafte Ausgestaltung der Führungen zur Umlenkung des Stranges erhält man, wenn diese aus mehreren auf einem Kreisbogen angeordneten, gegenüber der Führungsachse schräggestellten Rollen oder Walzen bestehen.

Bei einer derartigen Führung wird durch die Schrägstellung der Rollen erreicht, daß das Verseilgut beim Ablaufen auf den Rollen oder Walzen eine erzwungene Rotationsbewegung um seine eigene Achse ausführen kann, d. h. die Führungsrollen bilden aufgrund ihrer Schrägstellung einen drehenden Antrieb für das Verseilgut, wobei die Antriebskraft hierfür durch die Bewegung des Verseilgutes in seiner Längsrichtung gewonnen wird.

Es kann vorteilhaft sein, den Neigungswinkel der für die Führung verwendeten Rollen oder Walzen oder deren örtliche Lage in Längsrichtung der Führungsachse des Verseilgutes veränderbar zu gestalten, um die durch die Rollen oder Walzen hervorgerufene Drehbewegung des Verseilgutes verschiedenen Drehzahlen der Verseilköpfe der SZ-Verseileinrichtung anpassen zu können. Eine Veränderbarkeit des Neigungswinkels erhält man beispielsweise dadurch, daß die Achsen der Rollen oder Walzen an ihrem einen Ende raumfest und gelenkig gelagert und an ihrem anderen Ende in Richtung der Führungsachse des Verseilgutes verschiebbar gelagert sind (DE—OS 24 58 353).

Hinsichtlich der praktischen Ausgestaltung einer solchen Umlenkeinrichtung empfiehlt es sich, die Rollen oder Walzen auf einem zylindrischen Trakkörper anzuordnen. Dabei kann man derart vorgehen, daß die Umlenkrollen oder Umlenkwalzen in zwei die Lager enthaltenden Kreisringen gelagert sind, die entweder zur Veränderung der Schrägstellung der Achsen der Umlenkrollen oder Umlenkwalzen unabhängig voneinander verdrehbar sind oder die zur Veränderung der örtlichen Position der Rollen oder Walzen gemeinsam un ihre Achse drehbar sind.

An sich sind Verseilmaschinen bekannt, bei denen die Verseilelemente mit Hilfe eines Verseilbügels im Doppelschlag verseilt werden und bei denen das Verseilgut innerhalb des Verseilbügels mit einer Einrichtung um einen Winkel von 180° umgelenkt wird, die aus mehreren im Zuge des Verseilbügels hintereinander angeordneten, gegenüber der Führungsachse des Verseilgutes schräggestellten Rollen oder Rollenpaaren besteht. Die Verwendung einer solchen Einrichtung im Rahmen einer SZ-Verseilmaschine, die einen in mehrere Teilstrecken unterteilten gestreckten Zwischenspeicher enthält, ist dort jedoch nicht erwähnt (DE—As 15 10 091).

Beim Betrieb der neuen SZ-Verseilvorrichtung können durch die mehrfachen Umlenkungen des Verseilgutes innerhalb der Speichereinrichtung auf des Verseilgut große Zugkräfte einwirken. Um diese Zugkräfte zu vermindern, ist es zweckmäßig, zwischen den beiden am Ein- und Ausgang angeordneten Verseilköpfen eine oder mehrere Abzugeinrichtungen gleichachsig zu jeweils einer der geradlinigen Führungen anzuordnen, die gleichsinnig mit den Verseilköpfen rotierbar sind. Derartige Abzugeinrichtungen, die auch ihre Drehbewegung synchron mit den Verseilköpfen ändern würden, würden gleichzeitig die Funktion einer geradlinigen Führung übernehmen.

Bei der zweckmäßigen konstruktiven Ausgestaltung der neuen Speichereinrichtung wird man derart vorgehen, daß die am Eingang und am Ausgang der Speichereinrichtung angeordneten Verseilköpfe und die jeweils vor und hinter einer Führung zur Umlenkung des Stranges angeordneten weiteren Verseilköpfe in zwei zueinander parallelen Ebenen über- und/oder nebeneinander angeordnet sind. In diesem Fall ist es auch leicht möglich, die in einer Ebene angeordneten Verseilköpfe gemeinsam anzutreiben, wobei diese Verseilköpfe mit gleicher Drehzahl oder auch mit voneinander abweichender Drehzahl umlaufen können. Durch den Abstand der beiden parallelen Ebenen, in denen die Verseilköpfe angeordnet sind, wird die Speicherkapazität der Speichereinrichtung mitbestimmt. Im Interesse einer möglichst großen Speicherkapazität sollte dieser Abstand mehr als 20 m, vorzugsweise mehr als 30 m betragen.

Ein Ausführungsbeispiel der neuen SZ-Verseilvorrichtung ist in Fig. 1 zusammen mit zwei Diagrammen in den Figuren 2 und 3 schematisch dargestellt. Einzelne Konstruktionselemente der SZ-Verseileinrichtung sind in den folgenden Figuren 4 bis 14 dargestellt.

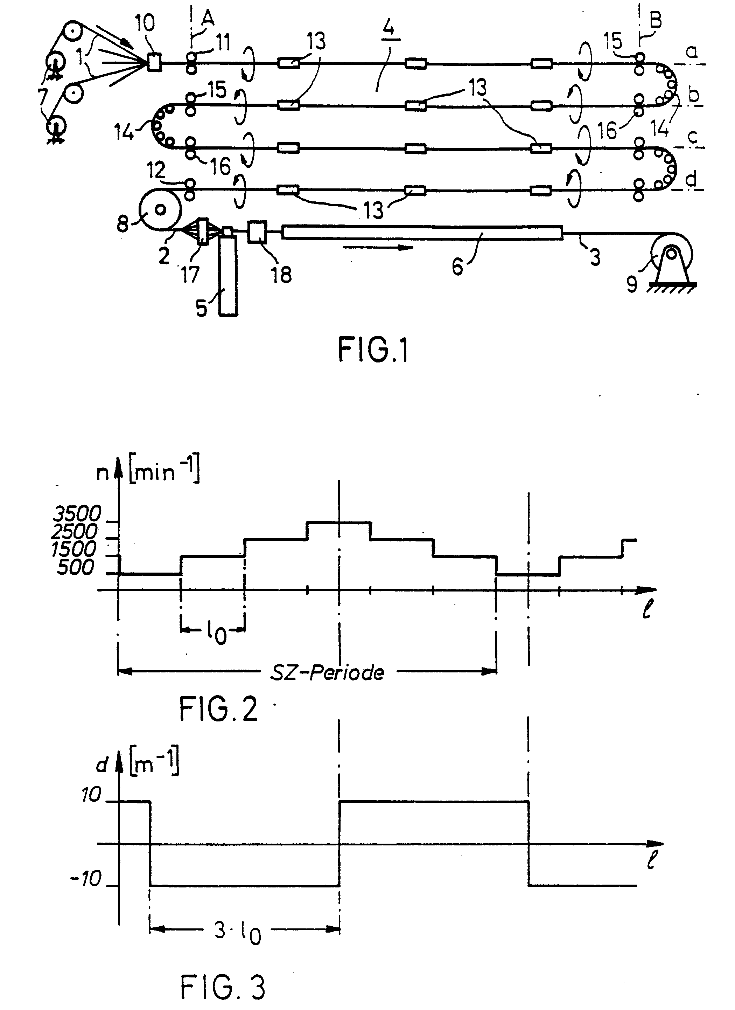

Fig. 1 zeigt eine Fertigungseinrichtung, die zur Herstellung einer flexiblen Schlauchleitung dient, indem zunächst Adern 1 zu einer Verseileinheit 2 verseilt werden und diese Verseileinheit unmittelbar anschließend im gleichen Arbeitsgang durch Umspritzen mit einem Kunststoffmantel zur Leitung 3 weiterverarbeitet wird. Die Verseilung der Adern 1 zur Verseileinheit 2 erfolgt mit Hilfe der SZ-Verseileinrichtung 4, während der Kunststoffmantel mittels des Extruders 5 und der nachgeschalteten Wasserkühleinrichtung 6 aufgebracht wird.

Die Adern 1 laufen von raumfest angeordneten Adervorräten 7 in die SZ-Verseileinrichtung 4 ein, werden durch diese mittels der Abzugeinrichtung 8, die als Scheibenabzug ausgebildet ist, hindurchgezogen und die Leitung 3 wird abschließend mit Hilfe der Aufwickeleinrichtung 9 aufgewickelt.

Die SZ-Verseileinrichtung 4 ist als Speichereinrichtung mit gestreckter Führung des Verseilgutes in der Verseilachse ausgebildet. Auf dem jeweils innerhalb der Speichereinrichtung befindlichen Längenabschnitt des Verseilgutes ist stets eine gewisse Anzahl von Verseilschlägen gespeichert, wobei der endgültige Verdrillungszustand des Verseilgutes beim Auslaufen aus der Speicher einrichtung festgelegt wird. Die Speichereinrichtung besteht zunächst aus einem am Eingang angeordneten ersten Verseilpunkt 10 in Form eines Verseilnippels, in den die Adern 1 einlaufen. Unmittelbar dahinter ist ein rotierbarer Versilkopf 11 angeordnet, mit dem die Verseilelemente beim Einlaufen in die Speichereinrichtung miteinander verseilt werden. Der zweite Verseilpunkt am Ausgang der Speichereinrichtung wird durch die Abzugscheibe 8 gebildet, d. h. der Auflaufpunkt des Verseilgutes auf der Abzugeinrichtung bildet den zweiten Verseilpunkt. Unmittelbar davor ist der zweite Verseilkopf 12 angeordnet, durch dessen Drehbewegung dem Verseilgut beim Auslaufen aus der Speichereinrichtung eine zweite Verdrillung erteilt wird, die in Überlagerung mit der beim Einlaufen in die Speichereinrichtung erzielten Verdrillung die endgültige Verdrillung ergibt.

Die Verseilköpfe 11 und 12 sind in zwei verschiedenen, zueinander parallelelen Ebenen a und d angeordnet. In diesen Ebenen sowie in den dazwischen befindlichen ebenfalls parallelen Ebenen b und c sind geradlinige Führungen 13 zur Führung der zu einem Strang 19 zusammengefaßten Verseilelemente angeordnet. Zwischen den einzelnen Ebenen sind Führungen 14 zur Umlenkung des Stranges 19 um 180° von jeweils einer Ebene in die nächstfolgende Ebene angeordnet. Mittels dieser Führungen zur Umlenkung des Stranges durchläuft der Strang die gesamte Speichereinrichtung etwa ziehharmonikaförmig oder schlangenförmig. Jeder Führung 14 zur Umlenkung des Stranges sind zwei Verseilköpfe 15 und 16 zugeordnet, von denen der einee der Führung vor- und der andere der Führung nachgeschaltet ist.

Die Abzugeinrichtung 8 dient gleichzeitig als Einrichtung zur Umlenkung des Stranges 19 aus der Ebene d in die Ebene der Wasserkühleinrichtung 6. Zwischen der Abzugeinrichtung 8 und dem dahinter angeordneten Extruder 5 ist eine bekannte Umseileinrichtung 17 angeordnet, mit der eventuelle Aderüberschlagungen des Verseilgutes aufgehoben werden. Zwischen dem Extruder 5 und der nachgeschalteten Wasserkühleinrichtung 6 befindet sich eine Markierungseinrichtung 18, mit deren Hilfe der extrudierte Mantel an den Stellen markiert wird, an denen sich die bei der Verseilung der Adern entstehenden Umkehrstellen der Drallrichtung ergeben. Die Steuerung dieser Markiereinrichtung erfolgt über die Drehbewegung der Verseilköpfe 11 und 12.

Die Verseilköpfe 11 und 12 sind zusammen mit den Verseilköpfen 15 und 16 in zwei zueinander parallelen Ebenen A und B angeordnet. Dadurch besteht die Möglichkeit, die in den Ebenen A und B angeordneten Verseilköpfe jeweils gemeinsam über einen einzigen Antrieb anzutreiben. Der Abstand der Beiden Ebenen A und B bestimmt zusammen mit der Anzahl der Ebenen a bis d die Speicherlänge der Speichereinrichtung. Der Abstand der Ebenen A und B kann beispielsweise 40 m betragen, wobei zwischen beiden Ebenen die geradlinigen Führungen 13 in einem Abstand von jeweils 10 m angeordnet sind. Bei vier parallelen Ebenen a bis d würde sich damit eine gesamte Speicherlänge von 160 m ergeben.

Beim Betrieb der SZ-Verseileinrichtung wird die Verseilung der Adern im wesentlichen durch die beiden Verseilköpfe 11 und 12 bestimmt. Diese rotieren mit stets gleichbleibender Drehrichtung und wechselnder Drehzahl. Dadurch ist sichergestellt, daß innerhalb der Speichereinrichtung keine Umkehrstellen der Drallrichtung auftreten, die sich andernfalls unter dem Einfluß von Zugspannungen und an den Umlenkeinrichtungen aufseilen könnten. Beim Betrieb der Verseileinrichtung muß sichergestellt sein, daß der innerhalb der Speichereinrichtung befindlich Strang 19 ungehindert die von den Verseilköpfen 11 und 12 erteilte Drehbewegung ausführen kann. Entsprechend sind die geradlinigen Führungen 13 und die Führungen 14 zur Umlenkung des Verseilgutes auszugestalten. Bei rohrartiger Ausgestaltung der geradlinigen Führungen 13 rotieren diese stets mit der gleichen Drehrichtung, bezogen auf die Verseilachse, wie die Verseilköpfe 11 und 12 und ändern synchron mit den Verseilköpfen 11 und 12 ihre Drehzahl, die gleich oder annähernd gleich der Drehzahl der Verseilköpfe 11 und 12 ist. Das gleiche gilt für die den Führungen 14 zugeordneten Verseilköpfe 15 und 16, die als Teil der Führungen 14 oder auch als letzte bzw. erste geradlinige Führung innerhalb einer Ebene betrachtet werden können. Insbesondere durch die Verseilköpfe 15 und 16 wird sichergestellt, daß der Strang 19 auch im Bereich der Führungen 14 die erforderliche Drehbewegung um seine eigene Achse ausführen kann.

Die Drehbewegungen der Verseilköpfe 11 und 12 sowie der geradlinigen Führungen 13 und der Fürungen 14 zur Imlenkung des Stranges 19 werden zweckmäßigerweise während einer Periode in mehreren Schritten geändert. Ein Beispiel hierfür zeigen die Figuren 2 und 3. Fig. 2 läßt erkennen, daß die Drehzahl n der Verseilköpfe in Abständen, die der gesamten Speicherlänge $l_0$ der SZ-Verseileinrichtung 4 entsprechen, in jeweils drei zunehmenden und drei abnehmenden Schritten geändert wird, wobei die Stufenhöhe der einzelnen Schritte vorzugsweise gleich groß gewählt ist. Biespielsweise kann die Drehzahl n während einer SZ-Periode L in den Stufen 500, 1500, 2500, 3500, 2500, 1500, 500 U/min geändert werden. Eine solche Drehzahländerung in drei zunehmenden und drei abnehmenden Schritten führt dazu, daß der Abstand der Umkehrstellen der Drallrichtung im fertig verseilten Verseilgut das Dreifache der Speicherlänge der SZ-Verseileinrichtung 4 b-trägt, wie es in Fig. 3 därgesteilt ist. Bei einer Speicherlänge von 160 m würde in diesem Fall der Abstand der Umkehrstellen 480 m betragen.

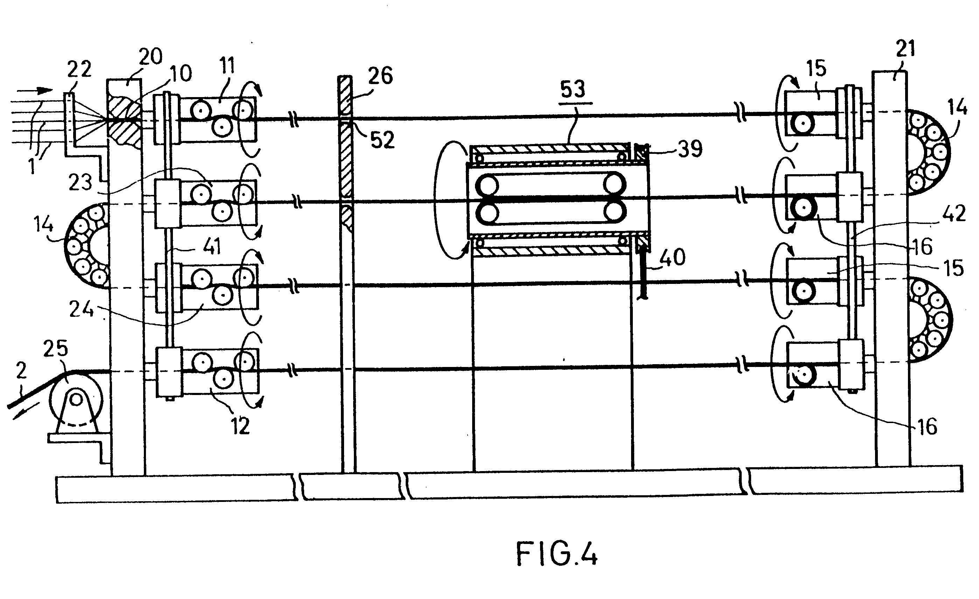

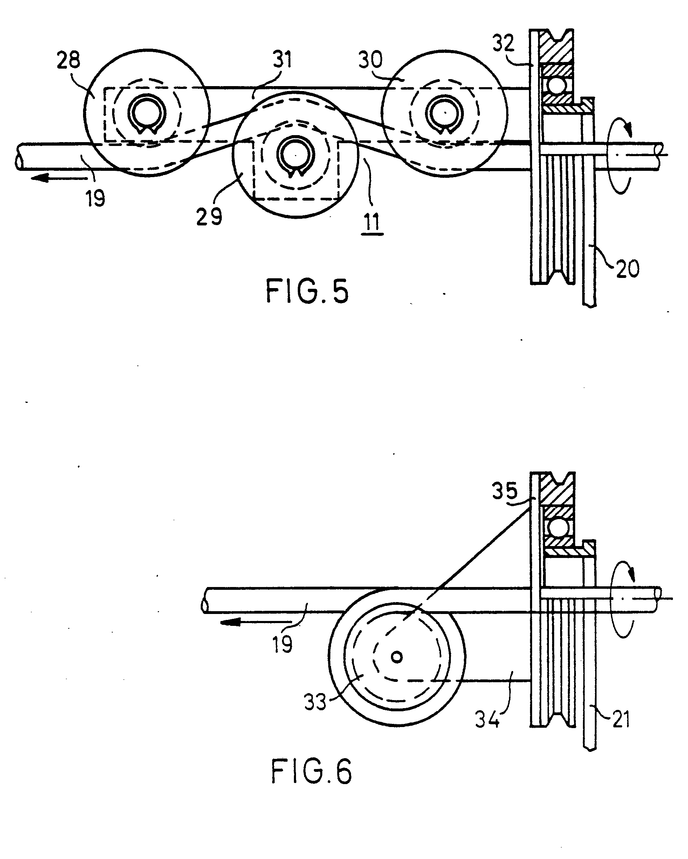

Bei dem in Fig. 4 dargestellten Ausführungsbeispiel sind im Vergleich mit Fig. 1 in den Ebenen A und B die beiden Rahmen 20 und 21 angeordnet, in denen die Verseilköpfe der SZ-Verseileinrichtung drehbar gelagert sind. Dem Verseilkopf 11 ist dabei der Verseilnippel 10 mit der vorgeschalteten Lockscheibe 22 zugeordnet, während dem Verseilkopf 12 als Verseilpunkt die Umlenkrolle 25 zugeordnet ist. Die im Rahmen 20 angeordneten Verseilköpfe 11, 12, 23 und 24 sind als sogenannte Drei-Rollen-Twister ausgebildet, wie sie in Fig. 5 dargestellt sind. Hierbei läuft das Verseilgut 19 wellenförmig durch die drei Rollen 28, 29 und 30 hindurch, die gemeinsam auf dem Rahmen 31 befestigt sind. Dieser ist seinerseits an dem im Rahmen 20 gelagerten Antriebsrad 32 befestigt.

Die im Rahmen 21 drehbar gelagerten Verseilköpfe 15 und 16 sind als Ein-Rollen-Twister ausgebildet, wobei die Rolle 33, wie in Fig. 6 dargestellt, von dem Verseilgut einmal umschlungen wird. Auch hierbei ist die Rolle 33 in einem Rahmen 34 befestigt, der mit dem im Rahmen 21 drehbar gelagerten Antriebsrad 35 verbunden ist.

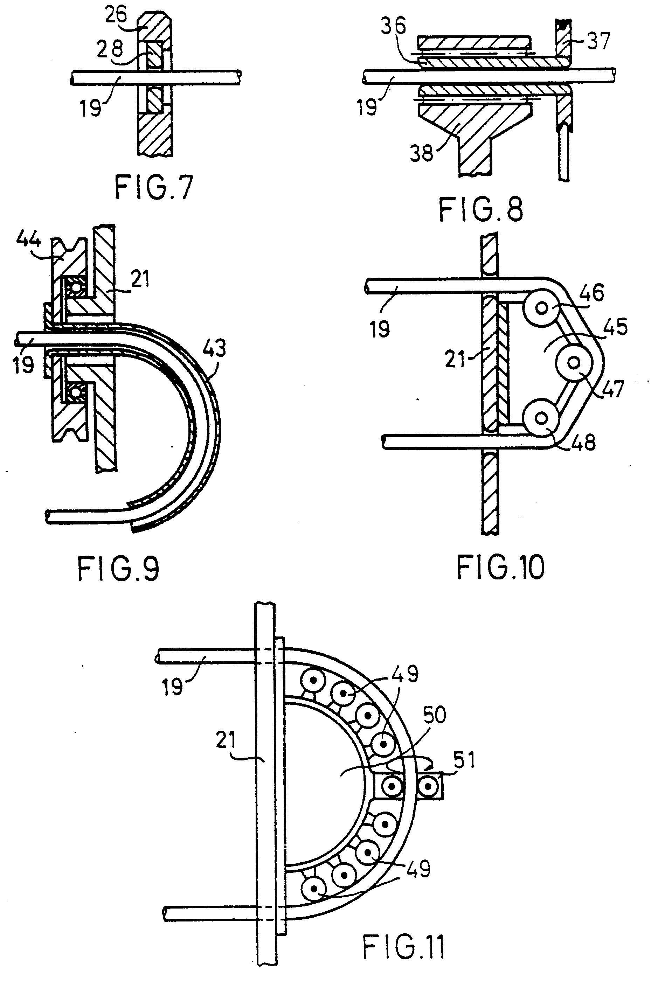

Zwischen den beiden Rahmen 20 und 21 ist ein Rahmen 26 für geradlinige Führungen angeordnet, die als Nippel 52 ausgebildet sind. Der Nippeldurchmesser ist etwas größer als der Durchmesser des Verseilgutes. Anstelle solcher nippelartigen Führungen, wie sie auch in Fig. 7 dargestellt sind, können auch rohrförmige, in Fig. 8 dargestellte Führungen 36 verwendet werden, deren Innendurchmesser etwa dem Durchmesser des Verseilgutes entspricht. Das Führungsrohr 36 ist mit einem Antriebsrad 37 verbunden, das gemeinsam mit dem Führungsrohr im Rahmen 38 drehbar gelagert ist. Am antriebsrad 37 greift ein Antriebsriemen an.

Zwischen den Rahmen 20 und 21 in Fig. 4 ist weiterhin die rotierende Abzugeinrichtung 53 angeordnet, die über das Antriebsrad 39 und den Antriebsriemen 40 von einem nicht näher dargestellten Antrieb mit wechselnder Drehzahl angetrieben wird. Die Abzuggeschwindigkeit der Abzugeinrichtung wird durch die rotierende Drehbewegung nicht beeinflußt.

Die in den Rahmen 20 und 21 angeordneten Verseilköpfe werden jeweils gemeinsam über Angreibsriemen 41 bzw. 42, die mit einem nicht näher dargestellten Motor gekoppelt sind, angetrieben.

Zur Umlenkung des Verseilgutes innerhalb der in Fig. 4 dargestellten Verseileinrichtung von einer in die nächstfolgende Ebene sind die Führungen 14 vorgesehen, für die weitere Ausführungsbeispiele in den Figuren 9 bis 11 dargestellt sind.

Fig. 9 zeigt eine Führung, die aus einem flexiblen, halbkreisförmig gebogenen Rohr 43 besteht, das mit jeweils einem Ende an einem Antriebsrad 44 befestigt ist; dieses ist drehbar im Rahmen 21 gelagert. Bei dem in Fig. 10 dargestellten Ausführungsbeispiel ist an dem Rahmen 21 das Winkelstück 45 befestigt, das drei Umlenkrollen 46, 47 und 48 trägt, über diese Umlenkrollen ist der Strang 19 zum Zwecke der Unlenkung um 180° geführt.

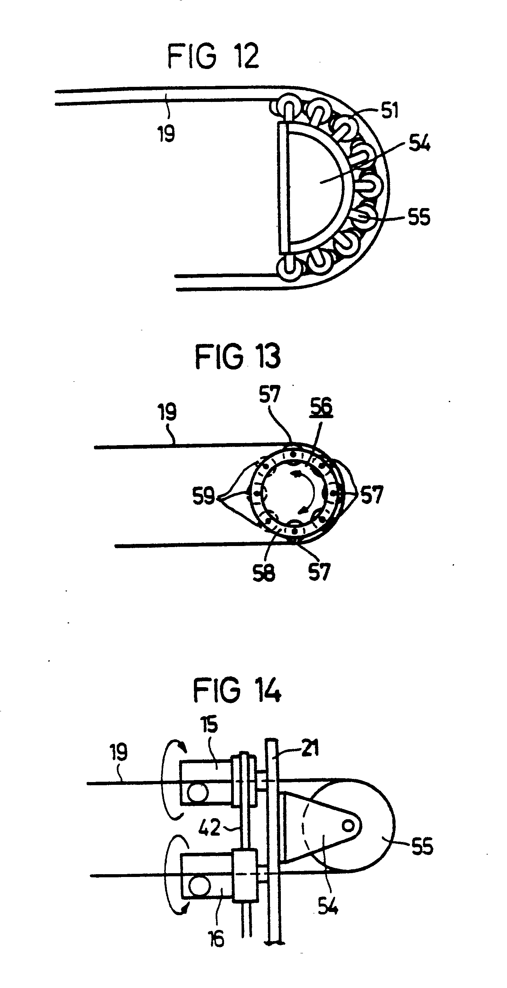

Bei dem in Fig. 11 dargestellten Beispiel ist zur Umlenkung des Stranges 19 um 180° eine Vielzahl von Umlenkrollen 49 vorgesehen, die auf dem Tragkörper 50 befestigt sind. In der Mitte der Führung befindet sich ein aus zwei gegeneinandergepreßten Rollen bestehender, antreibbarer Verseilkopf 51, der am Tragkörper 50 drehbar gelagert ist und auf den Strang 19 im Bereich der Umlenkung eine zusätzliche Torsionswirkung ausübt.

Die in Fig. 12 dargestellte Umlenkeinrichtung enthält zur Umlenkung des Stranges 19 eine Vielzahl von Walzen 51, die auf dem Tragkör per 54 mit Hilfe von Haltebügeln 55 angeordnet sind. Die Achsen der Walzen 51 sind gegenüber der Achse des Verseilgutes schräggestellt, so daß auf das Verseilgut beim Ableufen auf den Walzen 51 eine Rotationsbewegung ausgeübt wird. Die Schrägstellung der Walzen 51 ist durch eine entsprechende Befestigung der Haltebügel 55 veränderbar. Hierzu sind die Haltebügel beispielsweise mittels einer auf der Walzenachse senkrecht stehenden Achse am Tragkörper 54 befestigt, wobei die mit dem jeweiligen Haltebügel verbundene Achse durch Verdrehen zu unterschiedlichen Winkelstellungen der Walzen 51 führt.

Ein besonders zweckmäßiges Ausführungsbeispiel einer Umlenkeinrichtung zeigt Fig. 13. Die Umlenkeinrichtung 56 besteht aus fünf Umlenkrollen 57, die an beiden Enden mit ihren Achsen jeweils gemeinsam in einem Kreisring 58 gelagert sind. Die Umlenkeinrichtung als Ganzes ist stationär angeordnet. Einer oder beide Kreisringe werden jedoch in Zeitabständen, die für die SZ-Verseilung charakteristisch sind, derart um ihre Achse um einen bestimmten Winkel verdreht, daß die einzelnen Umlenkrollen ihre Winkelposition gegenüber dem über die Umlenkrollen geführten Verseilgut sprungweise ändern. Da hierbei nur sehr kleine Massen beschleunigt werden müssen, kann die Änderung der Winkelposition in sehr kurzer Zeit erfolgen. Sofern die Kreisringe mit weiteren Umlenkrollen 58 bestückt sind, kann der aus Kreisringen und Umlenkrollen gebildete Korb auch mit abschnittsweise wechselnden Drehzahlen um seine Achse rotieren.

Schließlich zeigt Fig. 14 ein sehr einfaches Beispiel einer Führung zur Umlenkung des Stranges 19. Die Umlenkeinrichtung hesteht aus einer einzigen Umlenkscheibe oder Umlenkrolle 55, die in der Halterung 54 gelagert sowie am Rahmen 21 befestigt ist und der die beiden Verseilköpfe 15 und 16 unmittelbar zugeordnet sind. Die Umlenkscheibe 55 kann mittels eines Motors angetrieben und damit als Abzugeinrichtung ausgebildet sein.

Abschließend wird ein Dimensionierungsbeispiel angegeben:

Baulänge 1 der Speichereinrichtung: 85
Anordnung der Verseilköpfe und der Führungen in vier parallelen Ebenen.
Speicherlänge der Speichereinrichtung $l_o$: 340 m
In jeder Ebene sind sieben geradlinige Führungen angeordnet. In der Mitte der zweiten Ebene befindet sich eine Rotierende Abzugeinrichtung.
Die Drehzahlen der Verseilköpfe werden zwischen 500 und 3500 U/min innerhalb einer Verseilperiode in drei gleich großen zunehmenden und drei gleich großen abnehmenden Schritten geändert.
Abzugsgeschwindigkeit v: 100 m/min
Schlaglänge s: 10 cm
Abstand L der Umkehrstellen der Drallrichtung: 1020 m

**Patentansprüche**

1. Vorrichtung zum SZ-Verseilen von Verseilelementen elektrischer Kabel und Leitungen mittels einer Speichereinrichtung, die zwischen einer ortsfest angeordneten Ablaufeinrichtung (7) für die Verseilelemente (1) und einer Abzug- und Aufwickeleinrichtung (8, 9) für das Verseilgut (2) angeordnet ist und die aus einem ersten, am Eingang der Speichereinrichtung angeordneten Verseilpunkt (Verseilnippel) (10) und aus einem zweiten, am Ausgang der Speichereinrichtung angeordneten Verseilpunkt (Verseilnippel, Umlenkrolle (8) und aus je einem unmittelbar hinter dem ersten Verseilpunkt und unmittelbar vor dem zweiten Verseilpunkt angeordneten, mit wechselnder Drehzahl rotierbaren Verseilkopf (11, 12) besteht, wobei die Rotationsachsen der Verseilköpfe in der Verseilachse liegen, in der auch die zu einem Strang zusammengefaßten Verseilelemente geführt sind, dadurch gekennzeichnet, daß zwischen den beiden Verseilköpfen (11, 12) mehrere ortsfeste Führungen (13) zur geradlinigen Führung und mindestens eine ortsfeste Führung (14) zur Umlenkung des aus den Verseilelementen gebildeten Stranges (19) um einen Umlenkwinkel von 180° oder annähernd 180° angeordnet sind, daß die Verseilköpfe (11, 12) und die geradlinigen Führungen (13) in zueinander parallelen Ebenen (a, b, c, d) und in diesen Ebenen gleichachsig angeordnet sind, wobei jeweils eine Führung (14) zur Umlenkung des Stranges zwischen der letzten geradlinigen Führung einer Ebene und der ersten geradlinigen Führung der nächstfolgenden Ebene angeordnet ist, und daß wenigstens die geradlinigen Führungen oder einige davon gleichsinnig mit den Verseilköpfen um die Verseilachse rotierbar sind und/oder daß die Führungsflächen wenigstens der geradlinigen Führungen oder der übrigen davon in Umfangsrichtung der einen Strang bildenden Verseilelemente an diesem kraftfrei oder nahezu kraftfrei anliegen.

2. SZ-Verseilvorrichtung nach Anspruch 1, dadurch gekennzeichnet, daß die geradlinigen Führungen (13) in mehr als zwei Ebenen (a, b, c, d) angeordnet sind.

3. SZ-Verseilvorrichtung nach einem der Ansprüche 1 oder 2, dadurch gekennzeichnet, daß unmittelbar vor und hinter jeder Führung (14) zur Umlenkung des Stranges ein weiterer Verseilkopf (15, 16) angeordnet ist und daß diese weiteren Verseilköpfe mit den am Eingang und am Ausgang der Speichereinrichtung angeordneten Verseilköpfen (11, 12) gleichsinnig rotierbar sind.

4. SZ-Verseilvorrichtung nach einem der Ansprüche 1 bis 3, dadurch gekennzeichnet, daß die geradlinigen Führungen ebenfalls als Verseilköpfe (15, 16, 23, 24) ausgebildet sind oder aus Rohrstücken (36) bestehen.

5. SZ-Verseilvorrichtung nach Anspruch 3 oder 4, dadurch gekennzeichnet, daß die Führung zur Umlenkung des Stranges (19) aus einer einzigen Umlenkscheibe (55) besteht.

6. SZ-Verseilvorrichtung nach Anspruch 5, dadurch gekennzeichnet, daß wenigstens eine der Umlenkscheiben (55) als Abzugeinrichtung ausgebildet ist.

7. SZ-Verseilvorrichtung nach einem der Ansprüche 1 bis 4, dadurch gekennzeichnet, daß die Führungen (14) zur Umlenkung des Stranges aus drei oder mehr auf einem Kreisbogen angeordneten Führungsrollen (46—48, 49) bestehen.

8. SZ-Verseilvorrichtung nach einem der Ansprüche 1 bis 4, dadurch gekennzeichnet, daß die Führungen (14) zur Umlenkung des Stranges aus mehreren auf einem Kreisbogen angeordneten, gegenüber der Führungsachse schräggestellten Rollen (51) oder Walzen bestehen.

9. SZ-Verseilvorrichtung nach Anspruch 8, dadurch gekennzeichnet, daß der Neigungswinkel der Rollen (51) oder Walzen veränderbar ist.

10. SZ-Verseilvorrichtung nach Anspruch 8, dadurch gekennzeichnet, daß die schräggestellten Rollen (57, 59) oder Walzen auf einem zylindrischen Tragkörper (58) angeordnet sind, der um seine Achse mit wechselnder Drehzahl drehbar ist.

11. SZ-Verseilvorrichtung nach einem der Ansprüche 1 bis 4, dadurch gekennzeichnet, daß jede Führung zur Umlenkung des Stranges aus einer flexiblen Hohlwelle (43) besteht.

12. SZ-Verseilvorrichtung nach einem der Ansprüche 1 bis 11, dadurch gekennzeichnet, daß zwischen den beiden am Ein- und Ausgang angeordneten Verseilköpfen eine oder mehrere Abzugeinrichtungen (53) gleichachsig zu jeweils einer der geradlinigen Führungen angeordnet sind, die gleichsinnig mit den Verseilköpfen rotierbar sind.

13. SZ-Verseilvorrichtung nach einem der Ansprüche 1 bis 12, dadurch gekennzeichnet, daß die am Eingang und am Ausgang der Speichereinrichtung angeordneten Verseilköpfe (11, 12) und die jeweils vor und hinter einer Führung zur Umlenkung des Stranges angeordneten weiteren Verseilköpfe (15, 16) in zwei zueinander parallelen Ebenen (A, B) über- und/oder nebeneinander angeordnet sind.

14. SZ-Verseilvorrichtung nach Anspruch 13, dadurch gekennzeichnet, daß die gemeinsam in einer Ebene angeordneten Verseilköpfe (15, 16) gemeinsam antreibbar (42) sind.

15. SZ-Verseilvorrichtung nach Anspruch 13 oder 14, dadurch gekennzeichnet, daß die parallelen Ebenen (A, B) einen Abstand von mehr als 20 m, vorzugsweise mehr als 30 m haben.

16. SZ-Verseilvorrichtung nach einem der Ansprüche 1 bis 15, bei der zwischen der Speichereinrichtung und der Aufwickeleinrichtung ein Extruder zum Ummanteln der verseilten Verseilelemente und ein Kühlbecken zum Abkühlen der Ummantelung angeordnet sind, dadurch gekennzeichnet, daß die Speichereinrichtung (4) parallel zum Kühlbecken (6) angeordnet ist.

17. SZ-Verseilvorrichtung nach Anspruch 16, dadurch gekennzeichnet, daß zwischen dem Ausgang der Speichereinrichtung (4) und dem Extruder (5) eine Umlenkeinrichtung zur Umlenkung der verseilten Verseilelemente um 180° angeordnet ist, die aus einem Scheibenabzug (8) besteht.

18. Verfahren zum Betrieb einer SZ-Verseilvorrichtung nach einem der Ansprüche 1 bis 17, bei dem die Drehbewegungen der Verseilköpfe bei gleichbleibender Drehrichtung synchron und stufenweise in Abständen verändert werden, die der Durchlaufzeit eines Querschnittelementes des Stranges zwischen dem ersten Verseilpunkt und dem zweiten Verseilpunkt entsprechen, dadurch gekennzeichnet, daß die Drehbewegungen der Verseilköpfe abwechselnd in wenigstens zwei zunehmenden und in gleich vielen abnehmenden Schritten verändert werden (Fig. 2).

19. Verfahren nach Anspruch 18, dadurch gekennzeichnet, daß die Drehzahldifferenz zwischen zwei aufeinanderfolgenden Schritten stets gleich ist (Fig. 2).

### Claims

1. Apparatus for the SZ-stranding of stranding elements of electrical cables and lines by means of a magazine arrangement which is located between a stationary supply device (7) for the stranding elements (1) and a draw-off and winding-up device (8, 9) for the stranded material (2), and which comprises a first stranding point (stranding nipple) (10) arranged at the input of the magazine arrangement, a second stranding point (stranding nipple, guide roller (8)) arranged at the output from the magazine arrangement, and two stranding heads (11, 12), one of which is arranged directly after the first stranding point and the other which is arranged immediately before the second stranding point, and which can be rotated at different speeds, the axes of rotation of the stranding heads lying in the stranding axis in which the stranding elements combine to form a cord, are also conducted, characterised in that between the two stranding heads (11, 12) there is arranged a plurality of stationary guides (13) for rectilinear guidance, and at lease one stationery guide (14) which serves to deflect the cord (19) composed of the stranding elements through an angle of deflection of 180°, or of approximately 180°; that the stranding heads (11, 12) and the rectilinear guides (13) are arranged in planes (a, b, c, d) which run parallel to one another and co-axially in these planes, a guide (14) which serves to deflect the cord being arranged between the last rectilinear guide of one plane and the first rectilinear guide of the succeeding plane; and that at least the rectilinear guides or some of them can be rotated about the stranding axis in the same direction as the stranding heads, and/or that the guide surfaces of at least the rectilinear guides or also of the others, contact the stranding elements forming a cord in a force-free or substantially force-free fashion in the peripheral direction of said stranding elements.

2. SZ-stranding apparatus as claimed in Claim 1, characterised in that the rectilinear guides (13) are arranged in more than two planes (a, b, c, d).

3. SZ-stranding apparatus as claimed in Claim 1 or Claim 2, characterised in that, for the deflection of the cord, a further stranding head (15, 16) is arranged immediately before and immediately after each guide (14), and that these further stranding heads are able to rotate in the same direction as the stranding heads (11, 12) which are arranged at the input and output of the magazine arrangement.

4. SZ-stranding apparatus as claimed in one of Claims 1 to 3, characterised in that the rectilinear guides are also designed as stranding heads (15, 16, 23, 24), or consist of tubular elements (36).

5. SZ-stranding apparatus as claimed in Claim 3 or Claim 4, characterised in that the guide which serves to deflect the cord (19) consists of a single deflecting plate (55).

6. SZ-stranding apparatus as claimed in Claim 5, characterised in that at least one of the deflecting plates (55) forms a draw-off device.

7. SZ-stranding apparatus as claimed in one of Claims 1 to 4, characterised in that the guides (14) which serve to deflect the cord consist of three or more guide pulleys (46—48, 49) arranged on an arc.

8. SZ-stranding apparatus as claimed in one of Claims 1 to 4, characterised in that the guides (14) which serve to deflect the cord consist of a plurality of pulleys (51) or rollers which are arranged on an arc and which are inclined to the guiding axis.

9. SZ-stranding apparatus as claimed in Claim 8, characterised in that the angle of inclination of the pulleys (51) or rollers can be varied.

10. SZ-stranding apparatus as claimed in Claim 8, characterised in that the inclined pulleys (57, 59) or rollers are arranged on a cylindrical carrier (58) which can be rotated about its axis at varying speeds.

11. SZ-stranding apparatus as claimed in one of Claims 1 to 4, characterised in that each guide which serves to deflect the cord consists of a flexible hollow shaft (43).

12. SZ-stranding apparatus as claimed in one of Claims 1 to 11, characterised in that, between the two stranding heads which are arranged at the input and output one or more draw-off devices (53) is or are arranged in each case co-axially with one of the rectilinear guides, said draw-off devices being able to rotate in the same direction as the stranding heads.

13. SZ-stranding apparatus as claimed in one of Claims 1 to 12, characterised in that the stranding heads (11, 12) which are arranged at the input and output of the magazine arrangement and the further stranding heads (15, 16) which are respectively arranged before and after a guide which serves to deflect the cord, are arranged one above another and/or one beside another, in two planes (A, B) running parallel to one another.

14. SZ-stranding apparatus as claimed in Claim 13, characterised in that the stranding heads (15, 16) which are commonly arranged in one plane can be commonly operated (42).

15. SZ-stranding apparatus as claimed in Claim 13 or Claim 14, characterised in that the parallel planes (A, B) are spaced apart by an interval of more than 20 m, and preferably more than 30 m.

16. SZ-stranding apparatus as claimed in one of Claims 1 to 15, wherein an extruder which serves to encase the stranded stranding elements and a cooling container which serves to cool the casing are arranged between the magazine arrangement and the winding-up device, characterised in that the magazine arrangement (4) is arranged parallel to the cooling vessel (6).

17. SZ-stranding apparatus as claimed in Claim 16, characterised in that a deflecting device which serves to deflect stranded stranding elements through 180° and which consists of a disc-shaped draw-off device (8), is arranged between the output of the magazine arrangement (4) and the extruder (5).

18. A process for the operation of SZ-stranding apparatus as claimed in one of Claims 1 to 17, wherein, whilst maintaining a uniform direction of rotation, the rotational movements of the stranding heads are viewed in synchronism and at stepped intervals which correspond to the transit time of a cross-sectional element of the cord between the first stranding point and the second stranding point, characterised in that the rotational movements of the stranding heads are varied alternately in at least two increasing steps and an equal number of decreasing steps (Figure 2).

19. A process as claimed in Claim 18, characterised in that the difference in speed of rotation between two consecutive steps is always equal (Figure 2).

**Revendications**

1. Dispositif pour le câblage SZ d'éléments de câblage de conducteurs et de câbles électriques au moyen d'un dispositif à moufles disposé entre un dévidoir fixe (7) pour les éléments de câblage (1) et un dispositif de tirage et d'enroulement (8, 9) pour le produit câblé (2), et constitué par un premier point de câblage (filière de câblage) (10) disposé à l'entrée du dispositif à moufles et par un second point de câblage (filière de câblage, produit de renvoi) (8) et par des têtes de câblage (11, 12) disposées respectivement immédiatement derrière le premier point de câblage et immédiatement en avant du second plan de câblage et capables de tourner à des vitesses variables, les axes de rotation des têtes de câblage étant situés dans l'axe de câblage dans lequel sont guidés les éléments de câblage qui sont assemblés en un faisceau, caractérisé par le fait, qu'entre les deux têtes de câblage (11, 12) sont disposés plusieurs guidages fixes (13) pour guider en ligne droite le faisceau (19) formé par les éléments de câblage, anisi qu'au moins un guidage fixe (14) pour dévier ledit faisceau (19) d'un angle de 180° ou d'à peu près 180°, que les têtes de câblage (11, 12) et les guidages en ligne droite (13) sont disposés dans des plans (a, b, c, d) parallèles entre eux et coaxialement dans ces plans, chacun des guidages (14) servant à la déviation du faisceau étant disposé entre le dernier guidage en ligne droite dans un plan et le premier guidage en ligne droite du plan suivant, et qu'au moins les guidages en ligne droite, ou certains d'entre eux, sont susceptibles de tourner dans le même sens que ces têtes de câblage autour de l'axe de câblage et/ou que les surfaces de guidage d'au moins les guidages en ligne droite ou des restants de ceux-ci reposent librement ou à peu près librement sur le faisceau, dans le sens périphérique des éléments de câblage qui forment ce dernier.

2. Dispositif pour le câblage SZ selon la revendication 1, caractérisé par le fait que les guidages en ligne droite (13) sont disposés dans plus de deux plans (a, b, c, d).

3. Dispositif pour le câblage SZ selon les revendications 1 ou 2, caractérisé par le fait qu'immédiatement avant ou après chaque guidage (14) servant à dévier le faisceau, est prévue une tête de câblage supplémentaire (15, 16), et que ces têtes de câblage supplémentaires sont susceptibles de tourner dans le même sens que les têtes de câblage (11, 12) disposées à l'entrée et à la sortie du dispositif à moufles.

4. Dispositif de câblage SZ selon l'une des revendications 1 à 3, caractérisé par le fait que les guidages en ligne droite sont également réalisés comme têtes de câblage (15, 16, 23, 24) ou sont constitués par des morceaux de tubes (36).

5. Dispositif de câblage SZ selon la revendication 3 ou 4, caractérisé par le fait que le guidage pour dévier le faisceau (19) est constitué par un disque de déviation unique (55).

6. Dispositif de câblage SZ selon la revendication 5, caractérisé par le fait qu'au moins l'un des disques de déviation (55) est réalisé comme dispositif de tirage.

7. Dispositif de câblage SZ selon l'une des revendications 1 à 4, caractérisé par le fait que les guidages (14) pour la déviation du faisceau sont constitués par trois ou plusieurs guidages (46—48, 49) disposés sur un arc-de-cercle.

8. Dispositif de câblage SZ selon l'une des revendications 1 à 4, caractérisé par le fait que les guidages (14) pour le déviation du faisceau sont constitués par plusieurs poulies (51) disposées suivant un arc-de-cercle et inclinées sur l'axe de guidage.

9. Dispositif de câblage SZ selon la revendication 8, caractérisé par le fait que l'angle d'inclinaison des poulies (51) ou rouleaux est susceptible d'être modifié.

10. Dispositif de câblage SZ selon la revendication 8, caractérisé par le fait que les poulies obliques (57, 59) ou rouleaux sont disposées sur un corps de support cylindrique (58), susceptible de tourner sur son axe à une vitesse susceptible d'être modifiée.

11. Dispositif de câblage SZ selon l'une des revendications 1 à 4, caractérisé par le fait que chaque guidage pour la déviation du faisceau est constitué par un arbre creux flexible (43).

12. Dispositif de câblage SZ selon l'une des revendications 1 à 11, catactérisé par le fait qu'entre les deux têtes de câblage disposées à l'entrée et à la sortie sont disposés un ou plusieurs dispositifs de tirage (53) respectivement coaxiaux au guidage rectiligne, susceptibles de tourner avec les têtes de câblage.

13. Dispositif pour le câblage SZ selon l'une des revendications 1 à 12, caractérisé par le fait que les têtes de câblage (11, 12) disposées à l'entrée et à la sortie du dispositif à moufles, ainsi que les têtes de câblage supplémentaires (15, 16) disposées respectivement à l'avant et à l'arrière d'un guidage pour la déviation du faisceau, sont disposées dans deux plans parallèles (A, B) les unes au-dessus des autres et/ou les unes à côté des autres.

14. Dispositif pour le câblage SZ selon la revendication 13, caractérisé par le fait que les têtes de câblage (15, 16) disposées en commun dans un plan, sont susceptibles d'être entraînées ensemble (42).

15. Dispositif pour le câblage SZ selon la revendication 13 ou 14, caractérisé par le fait que les plans parallèles (A, B) sont distants entre eux de plus de 20 m, de préférence de plus de 30 m.

16. Dispositif pour le câblage SZ selon l'une des revendications 1 à 15, dans lequel on prévoit entre le dispositif à moufles et le dispositif d'enroulement une extrudeuse pour gainer des éléments de câblage qui ont été câblés ainsi qu'une cuve de refroidissement pour refroidir la gaine, caractérisé par le fait que le dispositif à moufles (4) est disposé parallèlement à la cuve de refroidissement (6).

17. Dispositif pour le câblage SZ selon la revendication 16, caractérisé par le fait qu'entre la sortie du dispositif à moufles (4) et l'extrudeuse (5) est prévu un dispositif de déviation pour dévier de 180° les éléments de câblage qui ont été câblés, ledit dispositif de déviation étant constitué par un disque de tirage (8).

18. Procédé pour la mise en oeuvre d'un dispositif de câblage SZ selon l'une des revendications 1 à 17, dans lequel les mouvements de rotation des têtes de câblage sont modifiés, par intervalles, de façon synchrone et par paliers, le sens de rotation restant le même et lesdits intervalles correspondant à la durée de passage d'un élément de section transversale du faisceau entre le premier point de câblage et le second point de câblage, caractérisé par le fait que les mouvements de rotation des têtes de câblage sont alternativement modifiés en au moins deux pas croissants et en un même nombre de pas décroissants (figure 2).

19. Procédé selon la revendication 18, caractérisé par le fait que la différence de nombres de tours entre deux pas successifs est toujours la même (figure 2).

0 004 295

FIG.1

FIG.2

FIG. 3

1

FIG.4

FIG.5

FIG.6

FIG.7

FIG.8

FIG.9

FIG.10

FIG.11

## FIG 12

## FIG 13

## FIG 14